# EUROPEAN PATENT APPLICATION

(11) **EP 2 489 487 A2**
(43) Date of publication of application: **22.08.2012**
(21) Application number: 12464001.2
(22) Date of filing: 16.01.2012
(51) Int. Cl.: B28B 11/04

(54) **Method and apparatus for insulating hollow masonry blocks**

(30) Priority: 16.02.2011 RO 201100137
(71) Applicant: Dincá, Constantin, 023668 Bucuresti (RO)
(72) Inventor: Dincá, Constantin, 023668 Bucuresti (RO)

(57) **Abstract**

The invention relates to an apparatus for insulating hollow masonry blocks by filling the hollows by expanded polystyrene and a method of making such insulation, the blocks being used in construction for realization of masonry structures. Apparatus according to the invention comprises at least one transporter **(22)** with carriages or plates, a filling point **(23)** with a filling device **(3)** and an expanding point **(24)** with an expanding device **(13),** with two screws **(25)** actuated by an electric motor **(26)** with chain and gear wheels for vertical movement of the filling device **(3),** a mobile plate **(7)** actuated by the actuator **(9)** and vibrator **(10),** a dispenser **(5)** with three plates with some holes **(6)** through which the beads **(12)** fall into the hollows **(2),** an electric motor **(28)** and two screws **(27)** to actuate the expanding device **(13),** a seal gasket **(18),** a valve **(20)** for opening / closing of steam and an device **(29)** for synchronization of all operations, protected by a box **(30).** The method according to the invention consists in positioning the masonry blocks **(1),** with hollows **(2)** oriented vertically on a transporter plate **(22)** with a zone of perforations **(21)** equal as surface with the base surface of the masonry blocks **(1),** filling of hollows **(2)** with polystyrene beads **(12)** using the filling device **(3)** provided with the dispenser **(5),** sealing of the entire block **(1)** and, by means of the expanding device **(13),** the steam **(19)** is introduced with the pressure of 2 ... 3 bar and a temperature of 120 ... 130°C, which penetrate into hollows **(2)** passes among the polystyrene beads **(12),** expanding them and goes out in exterior through the perforations **(21)** of the transporter plate **(22).**

## Description

### Field of the invention

The invention refers to a method and an apparatus for insulating hollow masonry blocks, used in constructions for masonry structures.

### Background of the Invention

There is a variety of hollow masonry blocks which are made of concrete, baked clay or other materials, with hollows placed horizontally, vertically or longitudinally with different shapes, distribution, number or size of the hollows.

Hollows, reduces blocks weight, improve thermal and phonic insulation, without decreasing mechanical qualities of the masonry blocks.

To improve thermal and phonic insulation qualities of hollow masonry blocks, have been used over time various insulating materials that hollows were filled.

Filling of these hollows also stops the air circulation inside the masonry, while reducing the possibility of moisture accumulation that facilitates mold.

Are known many more insulating materials such as : rock wool, glass wool, silicate calcium, perlite, sawdust, paper pulp, wood fiber, cork, vegetable or animal fibers, polystyrene, polyurethane and others.

This invention uses, as insulating material for hollow masonry blocks insulation, expanded polystyrene.

As is known in U.S. 4275539 the polystyrene is expanded inside the hollows using steam injectors.

Presses are also used on the exterior walls of masonry block to exert counter-pressure to steam pressure inside the block, to protect it against breakage.

Is known U.S. 4295810 which also use steam injectors introduced inside blocks hollows to expand polystyrene.

Also, to fill hollows with polystyrene beads, before expanding, uses dispensers for each of the hollow.

Disadvantages of known solutions just refers to the fact that steam is blown into the hollows of masonry blocks, filled with polystyrene beads to be expanded, with injectors introduced in each hollow, which eliminates the possibility of using the same device without significant changes, which means construction of another device with another distribution of injectors for other types of masonry blocks with a different distribution, size, depth or shape of the hollows.

The same disadvantage is represented by the fact that for introduction of polystyrene beads into the hollows are used dispensers distributed according to distribution of blocks hollows.

Also, to protect the masonry blocks to break, during the expanding process with steam pressure, use additional devices to perform an external pressure against that applied inside the blocks.

The invention aims to eliminate the disadvantages of the examples presented using a single apparatus that, using the method exposed below to can isolate different types of masonry blocks with hollows by different size, shape, number, distribution and depth, while protecting against blocks breakage, without using additional devices.

### Summary of the Invention

Present invention refers to masonry blocks with hollows inside, open at both ends from side to side of blocks.

Into the hollows are introduced pre-expanded beads polystyrene which then will be expanded using proper steam pressure and temperature, the process leading to beads union at their surfaces and making the insulator which completely fill the hollows and attach by their walls.

Masonry blocks will be positioned with hollows vertically oriented on a transporter with carriages or plates provided with perforations on a surface equal with the blocks base surface.

The blocks hollows will be then filled with pre-expanded beads polystyrene with a filling device with dispenser.

Filling device is composed of a container, provided at the top with a feeder with polystyrene beads and at the bottom with a dispenser the upper surface size of blocks.

When is lowered, filling device comes in contact through the dispenser with the upper surface of the blocks.

The dispenser is made of three stacked plates crossed by holes arranged in staggered rows.

Holes are not larger than that the beads can pass freely.

The plate, between the three plates of the dispenser, is moving in relation to the other two, closing or opening holes, releasing or stopping polystyrene beads to fall in the blocks hollows.

Arrangement, size and density of holes make it possible to fill various types of blocks regardless of the arrangement, size and form of hollows.

The mobile plate of the dispenser is actuated through an electric or electromagnetic actuator and is provided with an electrical or electromagnetic vibrator to ease passage of the beads through the dispenser holes.

The blocks are then moved by transporter to the expanding device.

It will fully cover the masonry blocks with a parallelepiped shaped bell provided at the interior with a perforated plate.

The perforated plate is the size of the upper surface of masonry blocks, covering their hollows and has the possibility to move vertically depending on the size of the blocks, due to some springs.

Plate perforations are smaller in diameter than pre-expanded beads polystyrene.

On the lower edges, the bell is provided with a gasket that, when the bell cover the blocks and lower edges comes in contact with the transporter plate, prevents the loss of steam.

Steam introduced in the bell, which covers the blocks, through a valve, with corresponding pressure and temperature, penetrate through perforated plate, located at the top of masonry blocks, in the hollows filled with pre-expanded beads polystyrene, passes forced among them expanding them, then goes out of hollows through perforations in the transporter plate located at the base of the blocks.

In the same time, the steam pressure inside the bell will exert on the exterior walls of masonry blocks a force that will oppose the force created by the pressure inside the blocks preventing them breaking.

Perforated plate of the transporter, located at the base of masonry blocks as well as perforated plate inside the expanding device, located at the top of the blocks, allow steam passing through them and also act as expansion limiters of polystyrene in hollows.

If insulation of some of the hollows is not desired or if the shape of blocks requires, holes of the dispenser of the filling device can be obstructed as well as perforations of the carriage or plate of the transporter, using for example templates, corresponding to the respective hollows or the shape of the blocks.

In the phase of expanding polystyrene beads in the hollows of the masonry blocks, temperature of the steam will be around 120-130°C at a pressure of 2-3 bar.

The apparatus which is the subject of this invention comprises at least one transporter with carriages or plates, for transportation of the masonry blocks, a filling point of the blocks hollows with polystyrene beads and an expanding point of the pre-expanded beads polystyrene.

For invention efficiency in the industrial system, masonry blocks of the same type, shape and size, should be grouped in the rows of three, but can be done also other combinations.

Synchronization of the transporter, filling device together with the actuator of the plate and vibrator, expanding device together with steam valve and the entire apparatus is realized using electrical and electronic circuits, with the help of some time relay, control also their electric motors.

The electronic part may also contain photoelectric cells which sense the correct loading with blocks, lowering, raising or stopping the filling and expanding devices in case of malfunction.

The wiring diagram, not making the subject of this invention, will be made later by a specialized person.

### Brief description of the drawings

Method and apparatus presented offers the advantage that, using the same device, can isolate groups of different types of masonry blocks, with hollows that have a different arrangement, depth, size, number or shape, size or shape of blocks, while protecting against blocks breakage during expanding.

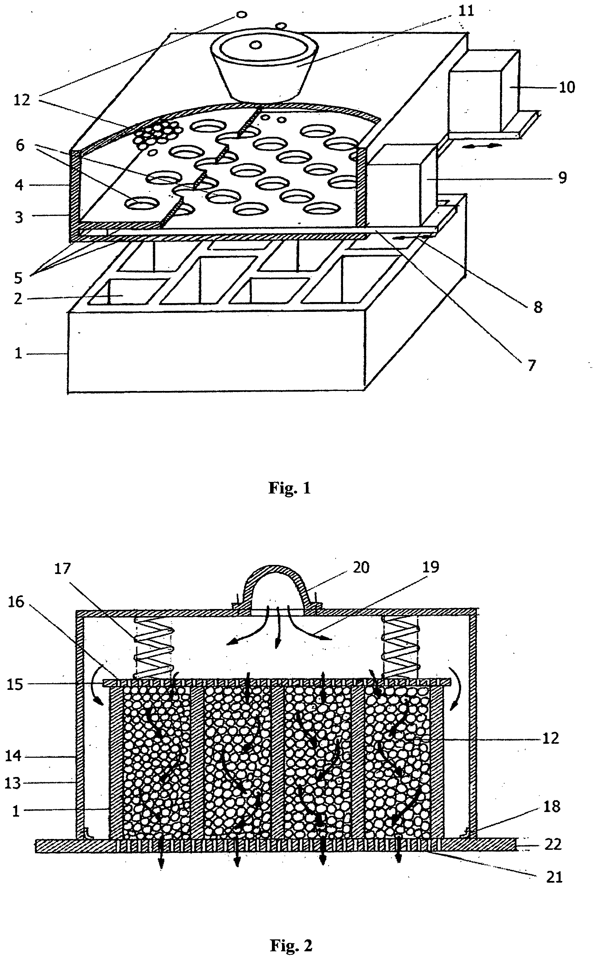

Further it will be given an embodiment example of the invention in connection with figures 1, 2 and 3 which are:
**Fig. 1** is the simplified view of the filling device of the hollow masonry blocks with pre-expanded beads polystyrene and a hollow masonry block.
**Fig. 2** is the schematic view of the expanding method and the expanding device of the pre-expanded beads polystyrene in the hollow masonry blocks.
**Fig. 3** is a simplified view of the entire apparatus for insulating hollow masonry blocks.

### Detailed description of a preferential embodiment

A hollow masonry block **1** can have inside at least a hollow to a lot of hollows **2,** which crosses a masonry block **1** from side to side being open at both ends.

For introduction of pre-expanded beads polystyrene **12** in hollows **2** of masonry blocks **1** is used a method that uses filling device **3.**

This is composed of a container **4** provided at the upper side with a feeder **11** and at the lower side with a dispenser **5** consisting of three plates stacked, crossed by the holes **6.**

Holes **6** are arranged in staggered rows and have a diameter not bigger than that to let the polystyrene beads can pass freely. Also have a density that allows filling of all hollows **2** of the block **1.**

Plate **7** is moving according to arrow **8** inside the dispenser **5** aligning holes of the plate **7** with the holes of the outer plates of the dispenser **5** closing or opening polystyrene beads **12** to pass through the holes **6.**

Plate **7** is actuated by an actuator **9** electric or electromagnetic and a vibrator **10** electric or electromagnetic.

Both, actuator **9** and vibrator **10** may be in the same time vibrator or actuator acting in the same time on the plate **7** according to ongoing process.

Expanding method presented in the invention, use expanding device **13** comprising a bell **14** which covers entire block **1.**

Inside the bell **14** is a perforated plate **15** the upper surface size of the block **1.**

Plate **15** has perforations **16** on the entire surface, their diameter being smaller than the diameter of pre-expanded beads polystyrene.

Plate **15** has possibility to move vertically, self adjusting depending the blocks **1** height, and sits down on the upper surface of the blocks **1** pressed by the springs **17.**

The bell **14** is provided at the lower edges with a sealing gasket **18** to prevent loss of steam.

Saturated steam **19** with corresponding pressure and temperature, enters inside the expanding device **13** through valve **20,** then enters through the perforations **16** of the plate 15 in the hollows **2** of the blocks **1,** forced passes among polystyrene beads **12** expanding them and making them to stick each other at the exterior, creating the insulator and then exits through perforations **21** of the transporter plate **22.** Surface with perforations **21** from the transporter plate **22** is the size of the blocks **1** base surface.

Steam **19** which enter inside the bell **14** of the expanding device **13** acts also, in the same time, on the outer walls of the blocks **1** creating a force opposite forces inside them preventing them from breaking.

The apparatus shown in the invention comprises at least one transporter with carriages or plates **22** carrying blocks **1,** a filling point **23** with filling device **3** and an expanding point **24** with expanding device **13.**

On the transporter plate **22** are placed the blocks **1** always in the same place on the perforated surface, with hollows in vertical position.

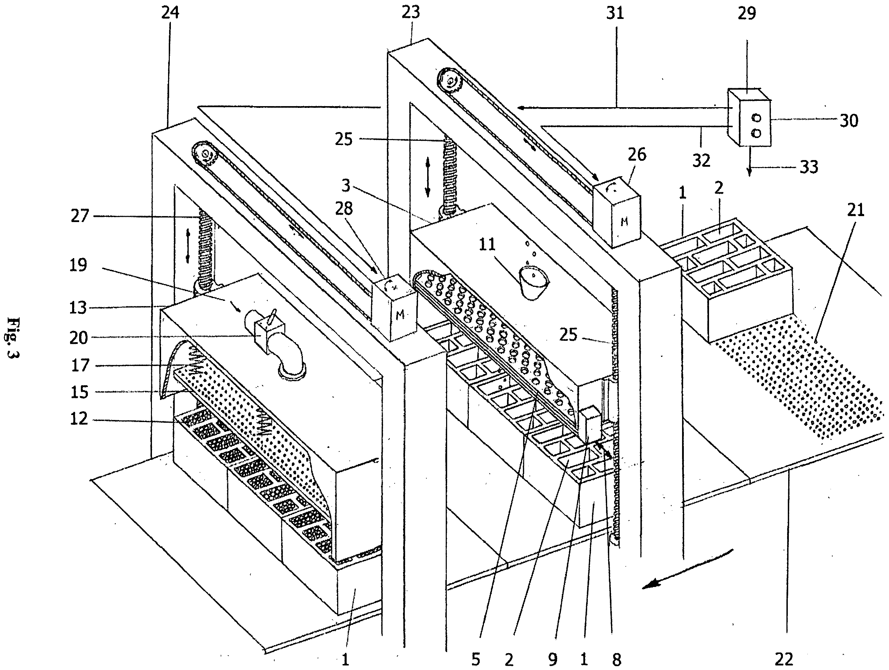

In **Fig. 3** is exemplified an arrangements of groups of three masonry blocks of the same type, shape and size, placed in a row.

This arrangement can be changed in various other arrangements, depending on the shape and size of blocks **1.**

After placing blocks **1** on the transporter **22,** this moves to the filling point **23.**

Transporter **22** is stopped in preset place, where the filling device **3** is lowered, for example by screws **25,** driven by an electric motor **26,** interconnected by chain and gear wheels, on the upper surface of a blocks **1.**

Then, the mobile plate **7** is actuated by the actuator **9** and the vibrator **10,** holes **6** of the three plates of the dispenser **5** aligns and the beads **12** fall in the hollows **2** up to their filling.

After a preset time, mobile plate **7** is actuated again, closing the holes **6,** the filling device **3** rises, the transporter **22** starts and brings the blocks **1** to expanding point **24** where it stops.

Expanding device **13** lowers, with the aid of, for example two screws **27** actuated by an electric motor **28** interconnected to the chain and gear wheels and covers entirely the block **1** contacting with the lower edges provided with the gasket **18,** transporter **22.**

Then, the valve **20** opens, leaving the steam **19** to enter inside the expanding device **13.**

After a predetermined time the beads **12** expand, the valve **20** is closed and the expanding device **13** is raised.

Transporter **22** is set in motion and removes blocks **1** from the expanding point **23.**

To ensure synchronization and movement of all the apparatus subassemblies, during working sequences, is used a synchronization device **29.**

Synchronization can be achieved by using mechanical means, electric and electronic known, as schematic is shown in Fig.**3****.**

Synchronization circuit is in the box **30** and is connected by electrical conductors **31, 32, 33** to the transporter **22,** filling point **23** and the expanding point **24.**

In the box **30** is also detection circuit which may comprise photoelectric cells that monitor the various execution phases, interrupting operation of the apparatus or of the working points in case of malfunctions or irregularities.

The invention, as described above, can support different modifications and adjustments, preserving it in the area and meaning of the claims.

## Claims

1. The method of isolation of hollow masonry blocks, by filling hollows with pre-expanded beads polystyrene and their expanding, using steam as an expanding agent to form insulator, **characterized in that** positioning of masonry blocks **(1)** with hollows **(2)** vertically oriented on perforated surface **(21)** of the transporter plate **(22),** introduction of pre-expanded beads polystyrene **(12)** in hollows **(2)** of the masonry blocks **(1)** using a filling device **(3)** with dispenser **(5)** and holes **(6),** the forced introduction of steam **(19)** with corresponding pressure and temperature among pre-expanded beads polystyrene **(12)** using an expanding device **(13)** with bell **(14)** that covers the entirely blocks **(1),** transiting by the steam **(19)** of hollows **(2)** coming out through the perforations **(21)** of the transporter plate **(22)** causing expanding of the beads **(12)** and forming the insulator and the application of steam pressure on the outer walls of the masonry blocks **(1)** concomitant expanding preventing their breaking.

2. The method as in Claim 1 **characterized in that** the masonry blocks **(1)** are positioned with hollows **(2)** vertically oriented on a perforated surface **(21)** the size of the base surface of masonry blocks **(1)** and perforations are smaller than the pre-expanded beads polystyrene **(12).**

3. The method as in Claim 1 **characterized in that** the introduction of pre-expanded beads polystyrene **(12)** in the hollows **(2)** of the blocks **(1)** is done using a filling device **(3)** with dispenser **(5)** and holes **(6).**

4. The method as in Claim **1 characterized in that** the expanding of the pre-expanded beads polystyrene **(12)** in the hollows **(2)** of the masonry blocks **(1)** is made by forced passing of the steam **(19)** among polystyrene beads **(12),** transiting the hollows **(2),** using a bell **(14)** that covers entirely blocks **(1)** and perforation **(21)** on the transporter plate **(22).**

5. The method as in Claim 1 **characterized in that** the expansion of polystyrene in hollows **(2)** of the masonry blocks **(1)** and applying pressure on the outer walls of the masonry blocks **(1)** to prevent them breaking is done simultaneously with a bell **(14)** covering blocks **(1)** entirely.

6. Apparatus for insulating hollow masonry blocks composed of at least one transporter for movement of hollow masonry blocks, a filling point of blocks hollows with pre-expanded beads polystyrene, an expanding point of pre-expanded beads polystyrene, a system for synchronization and monitoring the phases of transportation, filling and expansion, **characterized in that** the transporter **(22)** is with carriages or plates provided with perforations **(21)** on a surface the size of the base surface of masonry blocks **(1),** transporter **(22)** moves horizontally transporting the masonry blocks **(1)** to the filling point **(23)** then to the expanding point **(24)** and where the filling point **(23)** and the expanding point **(24)** can move vertically due the screws **(25)** and **(27)** driven by electric motors **(26)** and **(28),** interconnected with the chain and gear wheels, filling point **(23)** has a filling device **(3)** consists of a container **(4)** provided at the top with a feeder **(11)** and at the bottom with a dispenser **(5)** with holes **(6)** and mobile plate **(7)** actuated by an actuator **(9)** and a vibrator **(10),** expanding point **(24)** has an expanding device **(13)** consisting of a bell **(14)** provided at the top with a valve **(20)** that closes or opens entry of the steam **(19)** into the bell **(14)** for expanding, at the lower edges with a sealing gasket **(18)** and inside with a perforated plate **(15)** vertically mobile, actuated by springs **(17),** synchronization of all operations is performed by a synchronization device **(29)** protected by a box **(30)** in which there is the system of monitoring of these phases.

7. Apparatus as in Claim 6 **characterized in that** the transporter **(22)** is with carriages or plates provided with perforations **(21)** on a surface by the size the base surface of the masonry blocks **(1).**

8. Apparatus as in Claim 6 **characterized in that** the transporter **(22)** moves horizontally transporting masonry blocks **(1)** to the filling point **(23)** then to the expanding point **(24)** and where the filling point **(23)** and the expanding point **(24)** can move vertically due the screws **(25)** and **(27)** actuated by electric motors **(26)** and **(28)** interconnected with the chain and gear wheels.

9. Apparatus as in Claim 6 **characterized in that** the filling point **(23)** has a filling device **(3)** comprising a container **(4)** provided at the top with a feeder **(11)** and at the bottom with a dispenser **(5)** for filling with pre-expanded beads polystyrene **(12)** the hollows **(2)** of the masonry blocks **(1)** and where the mobile plate **(7)** of the dispenser **(5)** is actuated by an actuator **(9)** and a vibrator **(10).**

10. Apparatus as in Claim 9 **characterized in that** the dispenser **(5)** of filling device **(3)** consists of three stacked plates crossed by holes arranged in staggered rows, with a diameter not bigger than that to allow passage of beads **(12)** and density which allow filling of all hollows **(2)** of the blocks **(1)** and where the middle plate **(7)** of three of the dispenser **(5)** is mobile aligning holes **(6)** of the plates, opening or closing passage of pre-expanded beads polystyrene **(12).**

11. Apparatus as in Claim 9 **characterized in that** the mobile plate **(7)** of the dispenser **(5)** is actuated by an actuator **(9)** electric or electromagnetic.

12. Apparatus as in Claim 9 **characterized in that** the mobile plate **(7)** of the dispenser **(5)** is provided with a vibrator **(10)** actuated electric or electromagnetic.

13. Apparatus as in Claim 6 **characterized in that** the expanding point **(24)** has an expanding device **(13)** composed of a bell **(14)** provided at the top with a valve **(20)** that closes or opens entering of the steam **(19)** in the bell **(14)** for expanding, at the lower edges with a sealing gasket **(18)** and inside with a perforated plate **(15)** mobile on vertically, actuated by springs **(17).**

14. Apparatus as in Claim 13 **characterized in that** the bell **(14)** of the expanding device **(13)** covers entirely the blocks **(1)** and is provided at the lower edges with sealing gasket **(18).**

15. Apparatus as in Claim 13 **characterized in that** the plate **(15)** from inside the bell **(14)** of expanding device **(13)** is the size of the upper surface of the blocks **(1),** is perforated on all surface, perforations **(16)** are smaller than the pre-expanded beads polystyrene **(12),** is mobile vertically and self adjusting depending on the height of the blocks **(1)** due to some springs **(17).**
